# EUROPÄISCHE PATENTSCHRIFT

(11) **EP 0 884 338 B1**
(45) Veröffentlichungstag und Bekanntmachung des Hinweises auf die Patenterteilung: **02.10.2002**
(21) Anmeldenummer: 98110193.4
(22) Anmeldetag: 04.06.1998
(51) Int. Cl.: C08G 18/40, C08G 18/48, C08G 18/66, C08G 18/65

(54) **Verfahren zur Herstellung elastischer Polyurethanweichschaumstoffe**
Process for production of high resilient polyurethane foam
Procede pour la production de mousse de polyurethane elastique

(30) Priorität: 13.06.1997 DE 19725020
(43) Veröffentlichungstag der Anmeldung: 16.12.1998
(73) Patentinhaber: BAYER AG, 51368 Leverkusen (DE)
(72) Erfinder: Hettel, Hans, Dr., 51503 Rösrath (DE); Haas, Peter, Dr., 42781 Haan (DE)

(56) Entgegenhaltungen:
- EP-A- 0 350 868
- EP-A- 0 731 120
- EP-A- 0 778 301
- WO-A-95/09886

## Beschreibung

Die Erfindung betrifft ein Verfahren zur Herstellung elastischer Polyurethanweichschaumstoffe.

Als weichelastische, zellige Polstermaterialien finden im Prinzip zwei große Produktgruppen technische Nutzung. Dies sind zum einen die weichelastischen Polyurethane und zum andern die Latexschaumstoffe. Zwischen beiden Produktgruppen existieren Unterschiede in den Ausgangsprodukten, den Herstellungsverfahren und den mechanischen Eigenschaften sowie ihrer Anwendung So ist für Latexschaumstoffe ein etwas anderer Verlauf der Stauchhärtekurve nach DIN 53577 bzw. ISO 3386, Teil 1 und 2, gegeben. Hier zeigen Latexschaumstoffe im Gegensatz zu Polyurethanschaumstoffen kein ausgeprägtes Stauchhärteplateau, sondern vielmehr einen fast linearen Anstieg der Stauchhärte in einem bestimmten Stauchungsbereich. Für bestimmte Anwendungen ist diese Charakteristik erwünscht oder gar festgeschrieben. Die mittlere Rohdichte der Latexschaumstoffe liegt mindestens bei 60 kg/m³ oder meist höher und diese weist hier Stauchhärten zwischen 3 und 4,5 kPa auf. Solche Schaumstofftypen finden bevorzugt Einsatz zur Herstellung hochwertiger Matratzen.

Polyurethanschaumstoffe zeigen normalerweise in diesem Rohdichtebereich höhere Stauchhärten und zudem auch einen anderen Stauchhärte/Stauchungsverlauf.

Wünschenswert wäre es, den Stauchhärte/Stauchungsverlauf so zu beeinflussen, daß ein Latex-ähnliches oder gar Latex-gleiches Verhalten resultiert und hohe Elastizitäten erhalten werden. Zudem sollen diese Schaumstoffe geringe Werte einer bleibenden Verformung sowie auch geringe Werte nach einer Feuchtalterung aufweisen. Dies ist ein besonders wichtiges Kriterium.

In der DE-A 1 95 08 079 wird ein Verfahren zur Herstellung elastischer Schaumstoffe geringer Härte beschrieben, die im Bereich unter Rohdichten sehr gute mechanische Werte ergeben. Im Bereich höherer Rohdichten mit dem geforderten Harteverhalten ergeben sich jedoch Schwierigkeiten bei der Übertragung an das geforderte Eigenschaftsprofil

Aufgabe der vorliegenden Erfindung war es also, ein Verfahren zur Herstellung von hochelastischen Polyurethanschaumstoffen mit Latex-ähnlichem oder gar Latex-gleichem Verhalten sowie guten Alterungs- und besonders Feuchtalterungsverfahren bereitzustellen, das in einem Rohdichtebereich von ca. 30 bis 65 kg/m³ zu produktionssicheren Schaumstoffen mit diesem Eigenschaftsprofil führt.

Gegenstand der vorliegenden Anmeldung ist daher ein Verfahren zur Herstellung von weichelastischen Polyurethanschaumstoffen durch Umsetzung von
A) Polyisocyanaten oder Polyisocyanatprepolymeren,
B) Verbindungen mit mindestens zwei gegenüber Isocyanaten reaktionsfähigen Wasserstoffatomen von einem Molekulargewicht von 500 bis 18000,
C) gegebenenfalls weiteren Verbindungen mit mindestens zwei gegenüber Isocyanaten reaktionsfähigen Wasserstoffatomen von einem Molekulargewicht von 32 bis 499,
D) Wasser,
E) gegebenenfalls Treibmitteln,
F) Aktivatoren, Stabilisatoren sowie weiteren, an sich bekannten Zusatzstoffen,
   dadurch gekennzeichnet, daß man als Polyolkomponente B)
   i) mindestens ein Polyetherpolyol der Funktionalität 4 bis 8, bevorzugt 4,5 bis 8, besonders bevorzugt 5 bis 7, und
   ii) mindestens ein Füllstoff enthaltendes Polyol aus der Gruppe der PHD-(Polyharnstoffdispersionen), SAN- (Styrol-Acrylnitril-Pfropf-Polyole) oder PIPA (Polyisocyanat-Polyaddition mit Alkanolaminen)-modifizierten Polyoltypen der Funktionalität 2,5 bis 4
   sowie
G) Diisopropanolamin oder einem Gemisch aus Diisopropanolamin und Triethanolamin als Alkanolaminvernetzer.

Gegebenenfalls können alle an sich gebräuchlichen Treibmittel wie Hydrofluoralkane oder Alkene wie z.B. Pentan, i-Pentan, Cyclopentan oder auch Kohlendioxid eingesetzt werden.

Überraschend ist, daß durch die Kombination der Polyolkomponenten i) und ii) mit den Alkanolaminvernetzern G), die an sich Hartsegmentbildner sind, die Stauchhärte abgesenkt werden kann. Die Prozeßstabilität leidet auch bei geringen Vernetzermengen, jetzt sogar einhergehend mit höheren Härten, nicht.

Durch die erfindungsgemäße Polyolkombination i) und ii) sowie der Vernetzerkomponente G) lassen sich folgende Ziele in vorteilhafter Weise zusammen erreichen:
linearer Anstieg der Stauchhärte,
Rohdichte- sowie
Stauchhärtevariation im Latex-typischen Bereich,
geringe Druckverformung und
geringe Feuchtalterung.

Für das erfindungsgemäße Verfahren müssen die Polyole i) von einer Funktionalität von 4 bis 8 und die Polyole ii) von üblicher Funktionalität 2,5 bis 4 mit einem Füllstoffaufbau aus
a) Polyharnstoffdispersionen, die durch Umsetzung von Diaminen und Diisocyanaten in Gegenwart der Polyolkomponente ii) erhalten werden (PHD-Dispersionen),
b) Dispersionen, die durch Pfropfung von geeigneten Monomeren wie Styrol und/oder Acrylnitril an die Polyolkomponente ii) erhalten werden (SAN-Polyole), oder
c) Urethangruppen enthaltende Dispersionen, die durch Umsetzung von Alkanolaminen und Diisocyanaten in der Polyolkomponente ii) erhalten werden (PIPA-Polyole)
verwendet werden

Der Füllstoffgehalt, bezogen auf die Polyolkomponente B) aus i) und ii) beträgt 2 bis 30, bevorzugt 3 bis 15, besonders bevorzugt 3 bis 10 % Füllstoff PHD, SAN oder PIPA. Da die Füllstoffdispersionen ii) in der Regel zwischen 10 und 40 % Füllstoffanteil hergestellt werden, ist dies entsprechend zu berücksichtigen. Üblich ist oft ein Füllstoffanteil von 20 %, so daß dann z.B. bei 25 Gew.-Teilen ii) und 75 Gew.-Teilen i) ein Füllstoffgehalt von 5 Gew.-%, bezogen auf die Polyolkomponente B) erreicht wird.

Ausgangsmaterialien auf der Seite der Polyole i) sind Polyole, die durch Addition von Alkylenoxiden wie Ethylenoxid und Propylenoxid an höherfunktionelle Starter wie Sorbit, Mannit oder Sucrose alleinig oder in Kombination mit Startern wie Ethylenglykol, Propylenglykol, Glycerin, Trimethylolpropan oder Pentaerythrit, so daß eine Funktionalität zwischen 4 und 8 eingestellt werden kann.

Starter für die Füllstoffpolyole ii) sind Glycerin, Trimethylolpropan, Pentaerythrit, Propylenglykol und Ethylenglykol.

Unter Alkanolaminvernetzern G) sind Verbindungen wie Diisopropanolamin, Triisopropanolamin, Triethanolamin, Diethanolamin, 2-Hydroxyethyl-2-hydroxypropylamin und Bis-(2-hydroxyethoxyethyl)-amin oder deren Gemische zu verstehen.

Überraschend ist der Befund, daß eine über ii) eingebrachte relativ niedrige Füllstoffmenge in der Polyolkomponente B) in Kombination mit geringen Vernetzermengen G) und der höherfunktionellen Polyolkomponente i) zu stabilen Schaumstoffen mit hohen Stauch- und Eindruckhärten führen, die sonst nur mit wesentlich höheren Füllstoffgehalten erreicht werden können.

Als Isocyanate A) werden verwendet:
A) aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

   Q(NCO)ₙ,

   in der
   - n: 2 bis 4, vorzugsweise 2, und
   - Q: einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen bedeuten, z.B. solche Polyisocyanate, wie sie in der DE-OS 28 32 253, Seiten 10 bis 11, beschrieben werden.

Besonders bevorzugt werden in der Regel die technisch leicht zugänglichen nicht weiter modifizierten Polyisocyanate, z.B. das 2,4- und 2,6-Toluylendiisocyanat sowie beliebige Gemische dieser Isomeren("TDI"), Polyphenylpolymethylenpolyisocyanate, wie sie durch Anilin-Formaldehyd-Kondensation und anschließende Phosgenierung hergestellt werden ("rohes MDI"). Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten, können mitverwendet werden. Ihre Anwesenheit ist jedoch nicht verfahrensspezifisch.

Unter F) sind zu verstehen:

Als Stabilisatoren F) kommen vor allem Polyethersiloxane, bevorzugt wasserunlösliche Vertreter, in Frage. Diese Verbindungen sind im allgemeinen so aufgebaut, daß ein kurzkettiges Copolymerisat aus Ethylenoxid und Propylenoxid mit einem Polydimethylsiloxanrest verbunden ist. Derartige Schaumstabilisatoren sind z.B. in den US-PS 2 834 748, 2 917 480 und 3 629 308 sowie US-PS 2 917 480 beschrieben.

Katalysatoren F) der an sich bekannten Art, sind z.B. tertiäre Amine, wie Triethylamin, Tributylamin, N-Methyl-morpholin, N-Ethyl-morpholin, N,N,N',N'-Tetramethyl-ethylendiamin, Pentamethyl-diethylentriamin und höhere Homologe (DE-A 2 624 527 und 2 624 528), 1,4-Diazabicyclo-(2,2,2)-octan, N-Methyl-N'dimethylaminoethylpiperazin, Bis-(dimethylaminoalkyl)-piperazine, N,N-Dimethylbenzylamin, N,N-Dimethylcyclohexylamin, N,N-Diethylbenzylamin, Bis-(N,N-diethylaminoethyl)-adipat, N,N,N',N'-Tetramethyl-1,3-butandiamin, N,N-Dimethyl-β-phenylethylamin, 1,2-Dimethylimidazol, 2-Methylimidazol, monocyclische und bicyclische Amidine sowie Bis-(dialkylamino)-alkyl-ether wie 2,2-Bis-(dimethylaminoethyl)-ether.

Als Katalysatoren F) können auch organische Metallverbindungen, insbesondere organische Zinnverbindungen, verwendet werden. Als organische Zinnverbindungen kommen neben schwefelhaltigen Verbindungen wie Di-n-octyl-zinnmercaptid vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Zusätzliche Beispiele von gegebenenfalls erfindungsgemäß mitzuverwendenden Komponenten F), weiteren Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und baktereostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl Hanser Verlag, München 1993, 3. Auflage, z.B. auf den Seiten 104 bis 127 beschrieben.

### Herstellung der Schaumstoffe:

Die Reaktionskomponenten werden erfindungsgemäß nach dem an sich bekannten Einstufenverfahren, dem Präpolymerverfahren oder dem Semipräpolymerverfahren zur Umsetzung gebracht, wobei man sich oft maschineller Einrichtungen bedient, z.B. solcher, die in der US-PS 27 64 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Die Umsetzung erfolgt in der Regel in einem Kennzahlbereich von 90 bis 130.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, in Frage.

In der Form schäumt das schaumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß das Formteil eine kompakte Haut und einen zelligen Kern erhält. Erfindungsgemäß kann man in diesem Zusammenhang so vorgehen, daß man in die Form so viel schaumfähiges Reaktionsgemisch einträgt, daß der gebildete Schaumstoff die Form gerade ausfüllt.

Man kann aber auch so arbeiten, daß man mehr schaumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den US-PS 31 78 490 und 31 82 104 bekannt.

Bei der Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z.B. aus den DE-OS 21 21 670 und 23 07 589 bekanntgeworden sind.

Bevorzugt werden aber die Schaumstoffe durch Blockverschäumung hergestellt.

### Beispiele

### Beschreibung der Rohstoffe

### Polyisocyanat A)

Toluylendiisocyanat (Desmodur T80®)

### Polyolkomponente i)

Polyetherpolyol der OH-Zahl 28, hergestellt durch Addition von 82 Gew.-% Propylenoxid und 18 Gew.-% Ethylenoxid an Sorbit als Starter mit überwiegend primären OH-Endgruppen

### Polyolkomponente ii) 1

PHD-Füllstoffpolyol der OH-Zahl 28 einer 20%igen Dispersion aus Toluylendiisocyanat und Hydrazin in einem Polyetherpolyol aus 83 Gew.-% Propylenoxid und 17 Gew.-% Ethylenoxid sowie Trimethylolpropan als Starter mit überwiegend primären OH-Gruppen

### Polyolkomponente ii) 2

SAN-Füllstoffpolyol der OH-Zahl 28 einer 20%igen Dispersion aus einem mit 60 Gew.-% Acrylnitril und 40 Gew.-% Styrol gepfropften Polyol aus Trimethylolpropan als Starter und 83 Gew.-% Propylenoxid und 17 Gew.-% Ethylenoxid mit überwiegend primären OH-Gruppen.

### Vernetzerkomponente G

G 1) Triethanolamin
G 2) Diisopropanolamin

**Tabelle 1**

| Nr. | 1 | 2 | 3 | 4 | 5 | 6 | 7 |
|---|---|---|---|---|---|---|---|
| Polyol i) | 75 | 75 | 75 | 75 | 75 | 75 | 75 |
| Polyol ii) 1) | 25 | 25 | 25 | 25 | 25 | 25 | - |
| Polyol ii) 2) | - | - | - | - | - | - | 25 |
| Vernetzer G 1) | 0,5 | 1,0 | 1,5 | 0,5 | 1,0 | 1,5 | 0,5 |
| Vernetzer G 2) | 0,5 | 1,0 | 1,5 | 0,5 | 1,0 | 1,5 | 0,5 |
| Stabilisator KS 53 (Bayer AG) | 0,25 | 0,25 | 0,25 | 0,25 | 0,25 | 0,25 | 0,25 |
| Dabco 33 LV | 0,1 | 0,1 | 0,1 | 0,1 | 0,1 | 0,1 | 0,1 |
| Desmorapid SO (Bayer AG) | 0,15 | 0,15 | 0,15 | 0,15 | 0,15 | 0,15 | 0,15 |
| Wasser | 2,0 | 2,0 | 2,0 | 3,0 | 3,0 | 3,0 | 2,0 |
| Desmodur T 80 (Bayer AG) | 28,4 | 30,4 | 32,2 | 39,5 | 41,3 | 43,1 | 28,4 |
| Index | 113 | 113 | 113 | 113 | 113 | 113 | 113 |
| Mechanische Eigenschaften Rohdichte (kg/m³) | 47 | 43 | 41 | 31 | 30 | 31 | 46 |
| Stauchhärte DIN 53577 40 % Komp., (kPa) | 4,9 | 3,6 | 3,2 | 3,4 | 2,8 | 2,4 | 4,9 |
| Eindruckhärte DIN 53576 40 % Komp., (N) | 213 | 153 | 126 | 150 | 119 | 102 | 215 |
| Druckverformungsrest (90 % Komp.) | 1,7 | 2,8 | 3,5 | 3,9 | 4,0 | 3,1 | 1,8 |
| Feuchtalterung | | | | | | | |
| 22 h 70°C, 50 % LF | 2,7 | 4,0 | 5,0 | 6,3 | 6,2 | 5,3 | 2,8 |
| 22 h 40°C, 95 % LF | 2,6 | 2,8 | 4,0 | 6,2 | 7,4 | 7,0 | 2,5 |
| Rückprallelastizität (%) | 62 | 62 | 62 | 46 | 54 | 56 | 62 |

Durch den Polyolaufbau aus i) und ii) in Kombination mit den Vernetzern G werden mit außergewöhnlich geringen Füllstoffgehalten von 5 Gew.-% bezogen auf die Polyolkomponente B latexähnliche Schaumstoffe erhalten, da ihre Stauchhartekurve praktisch ohne Platean ansteigt. Überraschend ist der Befund, daß mit geringeren Mengen an Vernetzer G deutlich höhere Härten erreicht werden. Alterungs- und besonders die Feuchtalterungswerte zeigen ein ausgesprochen gutes Niveau, so daß insgesamt ein Schaumstoff für hochwertige Anwendungen im Matratzenbereich zur Verfügung steht, welcher im Bereich mittelhoher Rohdichten Eigenschaften wie Latexschaum höherer Rohdichten zeigt.

Zudem ist eine sichere Verarbeitung in einem breiten Rohdichte- und Härtebereich problemlos gegeben.

Ersetzt man das erfindungsgemäße Polyol i) durch ein Polyol der OH-Zahl 28 aus 82 Gew.-% Propylenoxid und 18 Gew.-% Ethylenoxid, jedoch mit Trimethylolpropan als Starter und überwiegend primären OH-Endgruppen, so erhält man ein instabiles Rohstoffgemisch, das in diesem Rahmen nicht verschäumbar ist.

Der Unterschied zu den mechanischen Eigenschaften von bisher nach üblicher HR-Technik hergestellten Schaumstoffe geht aus folgendem Vergleich hervor:

Werden die Beispiele 4 und 5 mit einer Stauchhärte von 3,4 bzw. 2,8 KPa bei einem Füllstoffgehalt von 20 bzw. 10 Gew.-% sowie einer Rohdichte von 30 kg/m³ auf der Basis trifunktioneller Polyole und Alkanolaminvernetzung mit Diethanolamin hergestellt, resultieren Feuchtalterungswerte, die zwischen 12 und 15 % liegen.

## Patentansprüche

1. Verfahren zur Herstellung weichelastischer Polyurethanschaumstoffe durch Umsetzung von
A) Polyisocyanaten oder Polyisocyanatprepolymeren,
B) Verbindungen mit mindestens zwei gegenüber Isocyanaten reaktionsfähigen Wasserstoffatomen von einem Molekulargewicht von 500 bis 18000, enthaltend
i) mindestens ein Polyetherpolyol der Funktionalität 4 bis 8, und
ii) mindestens ein Füllstoff enthaltendes Polyol aus der Gruppe der PHD-, SAN- oder PIPA-modifizierten Polyoltypen der Funktionalität 2,5 bis 4,
C) gegebenenfalls weiteren Verbindungen mit mindestens zwei gegenüber Isocyanaten reaktionsfähigen Wasserstoffatomen von einem Molekulargewicht von 32 bis 499,
D) Wasser,
E) gegebenenfalls Treibmitteln,
F) Aktivatoren, Stabilisatoren sowie weiteren, an sich bekannten Zusatzstoffen,
sowie
G) Diisopropanolamin oder einem Gemisch aus Diisopropanolamin und Triethanolamin als Alkanolaminvernetzer.

2. Verfahren nach Anspruch 1, **dadurch gekennzeichnet, daß** eine Polyolkomponente i) mit einer Starterfunktionalität 4 bis 8 und einem Äquivalentgewicht von 100 bis 4000 und ii) Polyharnstoffdispersionen eingesetzt werden.

3. Verfahren nach Anspruch 1, **dadurch gekennzeichnet, daß** eine Polyolkomponente i) mit einer Starterfunktionalität 4 bis 8 und einem Äquivalentgewicht von 100 bis 4000 und ii) SAN-Dispersionen eingesetzt werden.

4. Verfahren nach Anspruch 1, **dadurch gekennzeichnet, daß** eine Polyolkomponente i) mit einer Starterfunktionalität 4 bis 8 und einem Äquivalentgewicht von 100 bis 4000 und ii) PIPA-Dispersionen eingesetzt werden.

5. Verfahren nach Ansprüchen 1 bis 4, **dadurch gekennzeichnet, daß** die Reaktivkomponente B) zusammengesetzt ist aus 60 bis 90 Gew.-Anteilen i) und 10 bis 40 Gew.-Anteilen ii), wobei der Füllstoffanteil im Polyolgemisch aus i) und ii) 2 bis 30 Gew.-Anteile, bezogen auf die Komponente B) beträgt.

6. Verfahren nach Ansprüchen 1 bis 5, **dadurch gekennzeichnet, daß** die Polyolkomponente i) überwiegend primäre OH-Endgruppen und einen Ethylenoxidgehalt von 10 bis 30 Gew.-% sowie ein Äquivalentgewicht von 100 bis 4000 aufweist.

7. Verfahren nach Anspruch 1 bis 6, **dadurch gekennzeichnet, daß** als Alkanolaminvernetzer G) Diisopropanolamin eingesetzt wird.

8. Verfahren nach Anspruch 1 bis 6, **dadurch gekennzeichnet, daß** als Alkanolaminvernetzer G) ein Gemisch aus Triethanolamin und Diisopropanolamin eingesetzt wird.

9. Verfahren nach einem der Ansprüche 1 bis 8, **dadurch gekennzeichnet, daß** als Polyisocyanat Toluylendiisocyanat eingesetzt wird.

10. Verfahren nach einem der Ansprüche 1 bis 8, **dadurch gekennzeichnet, daß** als Polyisocyanate oder Polyisocyanatprepolymere gegebenenfalls durch Urethan-, Harnstoff-, Biuret-, Allophanat-, Carbodiimid- oder Uretdion-Gruppen modifiziertes Toluylendiisocyanat oder Diphenylmethandiisocyanat oder deren Prepolymere sowie deren Gemische eingesetzt werden.

11. Verfahren nach einem der Ansprüche 1 bis 10, **dadurch gekennzeichnet, daß** als Treibmittel Kohlendioxid, Hydrofluoralkane und/oder Alkane mit 4 bis 5 C-Atomen eingesetzt werden.

## Claims

1. A process for the production of flexible and resilient polyurethane foams by reacting
A) polyisocyanates or polyisocyanate prepolymers,
B) compounds having at least two isocyanate-reactive hydrogen atoms and a molecular weight of 500 to 18000, containing
i) at least one polyether polyol of a functionality of 4 to 8 and
ii) at least one polyol containing a filler from the group of PUD-, SAN- or PIPA-modified polyols of a functionality of 2.5 to 4,
C) optionally further compounds having at least two isocyanate-reactive hydrogen atoms and a molecular weight from 32 to 499,
D) water,
E) optionally blowing agents,
F) activators, stabilisers and other *per se* known additives,
together with
G) diisopropanolamine or a mixture of diisopropanolamine and triethanolamine as an alkanolamine crosslinking agent.

2. A process according to claim 1, **characterised in that** a polyol component i) having a starter functionality of 4 to 8 and an equivalent weight of 100 to 4000 and ii) polyurea dispersions are used.

3. A process according to claim 1, **characterised in that** a polyol component i) having a starter functionality of 4 to 8 and an equivalent weight of 100 to 4000 and ii) SAN dispersions are used.

4. A process according to claim 1, **characterised in that** a polyol component i) having a starter functionality of 4 to 8 and an equivalent weight of 100 to 4000 and ii) PIPA dispersions are used.

5. A process according to claims 1 to 4, **characterised in that** the reactive component B) is composed of 60 to 90 parts by weight of i) and 10 to 40 parts by weight of ii), wherein the filler content in the polyol mixture of i) and ii) is 2 to 30 parts by weight, relative to component B).

6. A process according to claims 1 to 5, **characterised in that** the polyol component i) has predominantly primary OH end groups and an ethylene oxide content of 10 to 30 wt.% together with an equivalent weight of 100 to 4000.

7. A process according to claims 1 to 6, **characterised in that** diisopropanolamine is used as the alkanolamine crosslinking agent G).

8. A process according to claims 1 to 6, **characterised in that** a mixture of triethanolamine and diisopropanolamine is used as the alkanolamine crosslinking agent G).

9. A process according to one of claims 1 to 8, **characterised in that** tolylene diisocyanate is used as the polyisocyanate.

10. A process according to one of claims 1 to 8, **characterised in that** the polyisocyanates or polyisocyanate prepolymers used are tolylene diisocyanate or diphenylmethane diisocyanate or the prepolymers thereof as well as mixtures thereof, optionally modified by urethane, urea, biuret, allophanate, carbodiimide or uretidione groups.

11. A process according to one of claims 1 to 10, **characterised in that** carbon dioxide, hydrofluoroalkanes and/or alkanes having 4 to 5 C atoms are used as the blowing agent.

## Revendications

1. Procédé de fabrication d'une mousse de polyuréthane souple et élastique par transformation de
A) polyisocyanates ou de prépolymères de polyisocyanate,
B) composés, d'un poids moléculaire de 500 à 18 000, avec au moins deux atomes d'hydrogène pouvant réagir avec des isocyanates contenant
i) au moins un polyétherpolyol de fonctionnalité 4 à 8, et
ii) au moins un polyol contenant une charge sélectionné parmi le groupement des types de polyol de fonctionnalité 2,5 à 4 modifiés par du PHD, SAN ou PIPA,
C) le cas échéant d'autres composés, d'un poids moléculaire de 32 à 499, avec au moins deux atomes d'hydrogène pouvant réagir avec des isocyanates,
D) l'eau,
E) le cas échéant des agents moussants,
F) des activateurs, des stabilisants ainsi que d'autres additifs connus en soi,
ainsi que
G) diisopropanolamine ou un mélange de diisopropanolamine et de triéthanolamine comme agent de réticulation alcanolamine.

2. Procédé selon la revendication 1, **caractérisé en ce qu'**on utilise un composant polyol i) avec une fonctionnalité d'amorceur de 4 à 8 et un poids équivalent de 100 à 4 000 et ii) des dispersions de polyurée.

3. Procédé selon la revendication 1, **caractérisé en ce qu'**on utilise un composant polyol i) avec une fonctionnalité d'amorceur de 4 à 8, et un poids équivalent de 100 à 4 000 et ii) des dispersions de SAN.

4. Procédé selon la revendication 1, **caractérisé en ce qu'**on utilise un composant polyol i) avec une fonctionnalité d'amorceur de 4 à 8 et un poids équivalent de 100 à 4 000 et ii) des dispersions de PIPA.

5. Procédé selon les revendications 1 à 4, **caractérisé en ce que** le composant réactif B) est composé de 60 à 90 parties en poids de i) et 10 à 40 parties en poids de ii), la proportion de charge dans le mélange polyol constitué de i) et ii) étant de 2 à 30 parties en poids, sur base du composant B).

6. Procédé selon les revendications 1 à 5, **caractérisé en ce que** le composant polyol i) présente des groupements terminaux OH principalement primaires et une teneur en oxyde d'éthylène de 10 à 30% en poids, ainsi qu'un poids équivalent de 100 à 4 000.

7. Procédé selon les revendications 1 à 6, **caractérisé en ce qu'**on utilise comme agent de réticulation alcanolamine G) de la diisopropanolamine.

8. Procédé selon les revendications 1 à 6, **caractérisé en ce qu'**on utilise comme agent de réticulation alcanolamine G) un mélange constitué de triéthanolamine et de diisopropanolamine.

9. Procédé selon l'une des revendications 1 à 8, **caractérisé en ce qu'**on utilise comme polyisocyanate du diisocyanate de toluylène.

10. Procédé selon l'une des revendications 1 à 8, **caractérisé en ce qu'**on utilise comme polyisocyanates ou prépolymères de polyisocyanate, du diisocyanate de diphénylméthane ou du diisocyanate de toluylène le cas échéant modifié par des groupements uréthane, urée, biuret, allophanate, carbodiimide ou uretdione ou leurs prépolymères ainsi que leurs mélanges.

11. Procédé selon l'une des revendications 1 à 10, **caractérisé en ce qu'**on utilise comme agent moussant du dioxyde de carbone, des hydrofluoroalcanes et/ou des alcanes avec 4 à 5 atomes de carbone.
